(19) **Europäisches Patentamt**
**European Patent Office**
**Office européen des brevets**

(11) **EP 0 984 582 B1**

(12) **EUROPEAN PATENT SPECIFICATION**

(45) Date of publication and mention
of the grant of the patent:
**23.01.2008 Bulletin 2008/04**

(51) Int Cl.:
*H04L 1/16* (2006.01)        *H04L 1/18* (2006.01)

(21) Application number: **99402046.9**

(22) Date of filing: **12.08.1999**

(54) **Method of error estimation in information data transmission**

Verfahren zur Fehlerschätzung in Informationsdatenübertragung

Procédé d'estimation d'erreur en transmission de donnée d'information

(84) Designated Contracting States:
**AT BE CH CY DE DK ES FI FR GB GR IE IT LI LU MC NL PT SE**

(30) Priority: **01.09.1998 ES 9801844**

(43) Date of publication of application:
**08.03.2000 Bulletin 2000/10**

(73) Proprietor: **Alcatel Lucent**
**75008 Paris (FR)**

(72) Inventor: **Boveda de Miguel, Angel**
**28034 Madrid (ES)**

(74) Representative: **Shamsaei Far, Hassan et al**
**Alcatel Lucent**
**Intellectual Property & Standards**
**54 rue La Boétie**
**75008 Paris (FR)**

(56) References cited:
**US-A- 5 677 918        US-A- 5 768 533**

**Description**

The present invention relates to a method of error estimation when transmitting information data in a communications system. More specifically, the method of the invention concerns the introduction of enhancements in the MAC (medium access control) bearer service with protected data, termed "MAC MOD-2 protected channel operation (Ip)", of the telecommunications standard known as DECT (Digital Enhanced Cordless Telecommunications) when asymmetric channels are being employed and transmission errors are present.

## BACKGROUND OF THE INVENTION

In an asymmetric multi-bearer data communications system based on the DECT standard, when a connection is set up between a transmitter and a receiver, the service known as "MAC MOD-2 protected channel operation (Ip)", defined in the ETSI standard ETS-300175-3, second issue, September 1996, clause 10.8.2, permits the transmission of data protected with automatic repeat request (ARQ) at MAC level from the receiver to the transmitter.

Reference is also made to the ETS-300175-4 standard that defines the DECT DLC layer.

This service is employed in almost all DECT data profiles, including:

A/B 1 (ETS-300435),
A/B 2 (ETS-300701),
C 2 (ETS-300651)
PPP Interworking Profile (EN-301240)

Automatic repeat request at MAC level permits adequate protection of the data against errors in the radio channel, and is generally accepted as an effective protection procedure.

On the other hand, the ETS-300175-3 defines, in clause 5.6.2, the possibility of using asymmetric multi-bearer connections.

These asymmetric connections consist of various (up to 23) forward bearers which work in the forward direction, transmitting user information, and one, or in some exceptional cases more than one, reverse bearer working in the opposite direction, carrying acknowledgement information for the aforementioned forward bearers.

When the "MAC MOD-2 protected channel operation (Ip)" service is employed with asymmetric channels, the forward bearers carry user data protected with the automatic repeat request facility that the "MAC MOD-2 protected channel operation (Ip)" service includes and the reverse bearer carries acknowledgement information at MAC level by means of the MAC_mod2-ACK message, defined in clause 7.3.5.4 of the ETS-300175-3 standard mentioned. The reverse bearer also transports the acknowledgement channel of the DLC (Data Link Control), called $G_f$.

In the event of an information transmission failure occurring on any of the forward bearers, the reception side sends over the reverse bearer the appropriate parameters in the MAC-mod2-ACK message. This provokes automatically the repetition by the transmitter of the content of the forward bearer(s) that has (have) failed. The system permits, under normal circumstances, retransmission of only those bearers that have actually failed.

All the data profiles mentioned above, with the exception of the case termed "A" of the A/B 1 and A/B 2, permit operation in asymmetric mode. Asymmetric operation permits certain improvements of a technical nature with respect to bit rate and efficiency, and it is to be expected that it will be extensively employed.

Nevertheless, the solution described above and presently standardised, presents certain drawbacks that are described hereafter.

If, in an asymmetric communication with a plurality of forward bearers in which it is possible to have up to 23 of said bearers and one reverse bearer, a transmission error occurs in the reverse bearer, the system is thereby forced to consider erroneous the transmission in all the forward bearers and proceed with their automatic retransmission, even assuming the statistical probability of this arising to be very low and less than the probability that the transmission has been satisfactory. This process is described in ETS-300175-3, clause 10.8.2.

As a consequence, unnecessary retransmissions are produced and as a result system efficiency is reduced. In addition, the retransmission itself completely blocks the transmission of new data, creating a delay in their sending.

Moreover, if the cause of the reverse bearer failure is the fading of the

Moreover, if the cause of the reverse bearer failure is the fading of the frequency employed, or the appearance of interference on the same frequency originated in another system, there is a high probability that the reverse bearer failure will be repeated in the following frame, giving rise to a new retransmission process on all forward bearers. The retransmissions can take place many times before the effect provoking the errors is removed, or until the system is able to perform bearer handover or bearer replacement of the reverse bearer. As a result, the loss of efficiency and the transmission delay build up and can reach levels unacceptable for some applications.

Thus, it is necessary to develop a method whereby unnecessary repetitions in data transmissions are prevented in the forward direction due to the presence of a transmission error on the reverse bearer.

A method and a device are known from US-A-5 677 918 related to error correction in a packet radio system. According to the method discloses in this document, wasted bandwidth due to unnecessary retransmissions that occur as a result of lost positive acknowledgements is eliminated and less downlink bandwidth is occupied than a scheme requiring positive acknowledgments. The packet delay is minimized by providing two levels of error correction at the datalink layer.

## DESCRIPTION OF THE INVENTION

To overcome the problems above mentioned, the method of error estimation in information data transmission has been proposed, together with a transmitter for carrying out said method, both being objects of the present invention.

According to the method of the invention, the automatic repeat request procedure of the DECT transmitter is altered in the case where errors are produced in the reverse bearer, with respect to that presently established in the standard.

To this end, the transmitter is permitted to evaluate, by means of an intelligent algorithm, the most probable error situation on the forward bearers. Said estimation is made in the absence of the acknowledgement message transmitted on the reverse bearer. Depending on the result of the estimation based on said algorithm, the transmitter decides to continue with the transmission of new data in a normal manner or to retransmit each bearer in the event of estimating that the transmission over it contains errors. The algorithm operates individually, bearer by bearer.

## DESCRIPTION OF A PREFERRED EMBODIMENT

The present invention is preferentially, but not exclusively, implemented in an asymmetric multi-bearer data communications system based on the DECT standard, comprising at least one transmitting means or transmitter, from which data originated by a service user are sent to at least one receiving means or receiver. Nonetheless, it is to be pointed out that in the object of the invention, though not in full compliance with the European "Digital Enhanced Cordless Telecommunications (DECT)" standard, the DECT MAC (medium access control) layer, as defined in the ETS-300175-3 standard, is employed in whole or in part and use is made of the data bearer service termed "MAC MOD-2 protected channel operation (Ip)" defined by the ETSI in said standard.

The transmitter according to the present invention includes and is capable of executing an algorith that permits an estimation to be made of the most probable error situation on the forward bearers. If the situation should arise of the acknowledgement message transmitted on the reverse bearer being absent, for example due to an error on said bearer, the transmitter acts in an intelligent manner, proceeding or not with data retransmission according to the most probable situation estimated by the algorithm.

The algorithm that decides the action to be adopted by the transmitter is termed the estimation algorithm. The estimation algorithm performs the computation of this estimation independently for each forward bearer.

According to the error situation actually occurred and with the decision taken by the estimation algorithm, four possible cases can arise, which shall be interpreted by the receiver according to the following table:

| What actually occurred | What the algorithm estimated (ARQ action) | What the receiver interpreted | DP |
|---|---|---|---|
| Transmission process: MAC-mod2-ACK message sent | | | |
| Transmission correct ACK = last frame | Transmission correct | Normal progress | NO |
| Transmission correct ACK = last frame | Transmission error. Retransmission | Unnecessary retransmission | NO |
| Transmission incorrect ACK = last frame -1 | Transmission correct | Data hop | YES |
| Transmission incorrect ACK = last frame -1 | Transmission error. Retransmission | Retransmission | NO |
| In this table:<br>ACK is the value of the ACK bit of the MAC-mod2-ACK message as is defined in the ETS-300175-3 standard. DP indicates the loss of a data packet termed PDU (protocol data unit). | | | |

As can be seen from the table, there are four possibilities of interaction between the transmitter and the receiver:

- if the transmission has been correct and the estimation algorithm also estimates the transmission was correct, the receiver shall interpret this as a normal progress state without any data item having been lost;
- if the transmission has been correct but the estimation algorithm considers the transmission has been incorrect, the transmitter will repeat the transmission and the receiver will interpret this as an unnecessary retransmission without any data item having been lost;
- if the transmission has been incorrect but the estimation algorithm considers the transmission was correct, the transmitter will not retransmit the faulty data. In this case the receiver will interpret this as a hop in data sending for which reason loss of data occurs;
- finally, if the transmission has been incorrect and the estimation algorithm also considers the transmission was incorrect, the receiver will interpret this as a transmission error and the faulty data will be retransmitted, thereby avoiding the loss of data.

According to the method of the present invention, the estimation algorithm permits an estimated value to be established that is computed with respect to each bearer, said value being an indication of the probability of error on said bearer. Hereunder, by way of illustration but not of limitation, a formula is given which represents said estimation algorithm:

$$est = \sum_{i=1}^{N} x_i k_i + \frac{1}{Y}\sum_{i=1}^{N} y_i l_i + \frac{1}{Z}\sum_{i=1}^{N} z_i m_i + \sum_{i=1}^{N} v_i n_i + \sum_{i=1}^{N} w_i p_i + w_0 p_0 - K$$

It shall be considered that a bearer has been received with errors, and therefore retransmitted, if "est" $\geq 0$; on the other hand, said bearer shall be considered to have been received correctly if "est" < 0.

In this formula N; $k_1,..., k_N$; $l_1,..., $ IN; $m_1, ..., m_N$; $n_1, ..., n_N$; $p_1, ..., p_N$; $p_0$; K, are constants of the algorithm. The parameter N is a positive whole number that represents the number of preceding frames that are taken into account in the evaluation process. The parameters $k_1,..., k_N$; $l_1,..., $ IN; $m_1, ..., m_N$; $n_1, ..., n_N$; $P_1, ..., p_N$; $p_0$ are the weighting factors of the algorithm that give weight to the relative importance of the different variables in the algorithm computation. The parameter K is the threshold value which, when subtracted from the rest of the computation, determines if the result of the estimation is positive or negative, the first case signifying that the evaluated bearer was received with errors and must be retransmitted, and the second case that it was received correctly.

Likewise, $x_1, ..., x_N$; $y_1, ..., y_N$; $z_1, ..., z_N$; $v_1, ..., v_N$; $w_1, ...,w_N$; $w_0$; Y; Z are input variables with the following significance:

In the following description, the notation $x_i$ ($x_1$ - $x_N$), signifies the N variables $x_i$, with i between 1 and N:

$X_i$ ($x_1$ - $X_N$) equal to 1 if the evaluated bearer was received with errors in the frame transmitted i frames before the present one; otherwise, equal to 0;

$y_i$ ($y_1$ - $y_N$) is the total number of forward bearers that have been declared as received with errors in the frame transmitted i frames before the present one;

$z_i$ ($z_1$ - $z_N$) is the number of forward bearers that operate on the same frequency as the evaluated bearer and that were declared as received with errors in the frame transmitted i frames before the present one;

$v_i$ ($v_1$ - $v_N$) equal to 1 if the evaluated bearer operates at the same frequency as a reverse bearer reported as received with errors by the MAC-mod2-ACK message, in the frame transmitted i frames before the present one; otherwise equal to 0;

$w_i$ ($w_1$ - $W_N$) equal to 1 if the evaluated bearer was the duplex bearer associated with a reverse bearer that has been received with errors in the frame transmitted i frames before the present one; otherwise equal to 0;

$w_0$ equal tol if the evaluated bearer is the duplex bearer associated with a reverse bearer received with errors in the present frame; otherwise equal to 0;

Y is the total number of forward bearers in the connection; and

Z is the total number of forward bearers that operate on the same frequency as the evaluated bearer.

Thus the formula presented above permits the transmitter to adopt intelligent decisions, which can be summed up as follows:

For each of the forward bearers, an error probability estimation ("est") is computed that determines whether it is to be retransmitted or not in the event of the "MAC-mod2-ACK" message being absent. The computation of this estimation takes the following factors into consideration:

- If the bearer was recognised as having been received with errors in any of the last N frames. If this case arises, it is considered the probability that the bearer could have been transmitted with errors in the present frame also is increased, and therefore the value of the estimation computation is increased.
- If other bearers that operate on the same frequency as the evaluated one were recognised as having been received with errors in any of the last N frames. In this case, it is considered the probability of the evaluated bearer that works on the same frequency having failed is also increased. The value of the estimation computation is incremented by means of a series of additions proportional to the number of bearers that operate on the same frequency and that failed in each of the preceding N frames.
- If any other bearers were recognised as having been received with errors in any of the last N frames. In this case it is considered the probability of the bearer having failed is also increased, but to a lesser extent. The value of the estimation computation is incremented by means of a series of additions proportional to the number of bearers that failed in each of the preceding N frames.
- If the bearer was operating on the same frequency as a reverse bearer that has failed in any of the preceding N frames. In this case, it is considered that the probability that the evaluated bearer having failed is also increased. The value of the estimation computation is incremented.
- If the evaluated bearer belongs to the same duplex bearer as a reverse bearer that has failed in any of the preceding N frames. In this case, it is considered the probability of the evaluated bearer having failed is additionally increased. The value of the estimation computation is incremented.
- If the evaluated bearer belongs to the duplex bearer associated with the reverse bearer that has failed in this same frame. In this case it is considered the probability of the evaluated bearer having failed is also increased. The value of the estimation computation is incremented.

In this way the forward bearers shall only be retransmitted when the transmitter determines there is a sufficiently high probability that said bearer has failed.

Selective retransmission can be used to advantage in the data link control (DLC) layer of the time slots that may have been filtered by error into the estimation process. To this end, a new class of DLC has to be employed, different to those envisaged in the ETS-300175-4 standard with the following characteristics:

- All operations with this alternative option are similar to those of class 1 DLC (defined in clause 14.3.3 of ETS-300175-4) except for the following:

   The reception of a FU6b frame over channel $G_f$ (refer to clause 12.7.1 of ETS-300175-4) containing the A/N bit of the "receive sequence number" (refer to clause 13.4.3) with value "0", is interpreted as a request for selective retransmission and provokes the retransmission of the protocol data unit (PDU) indicated in bits ER7, ..., ER1 (refer to clause 13.4.3). In this case only this unit (PDU) is retransmitted.

## Claims

1. **Method of error estimation in information data transmission** in a communications system in which said data are transmitted by means of data forward bearers from at least one transmitting means to at least one receiving means, **characterised in that** said at least one transmitting means estimates, by means of an estimation algorithm, the most probable error situation in the transmission of the respective data bearers transmitted by said transmitting means, in response to a lack of reception of an acknowledgement message of data reception from each receiving means by means of a bearer in reverse direction, that is, from said receiving means to said transmitting means.

2. **Method** according to claim 1, **characterised in that** in a situation of lack of the acknowledgement message of data reception, the transmitting means retransmits the corresponding bearer in the event that the estimation algorithm determines that there is a probability of said bearer being transmitted erroneously.

3. **Method** according to the preceding claims, **characterised in that** the algorithm operates, with respect to each forward bearer, in an individual manner.

4. **Method** according to any one of the claims 1 to 3, **characterised in that** the transmitting means retransmits a forward bearer if a probability estimation calculated by an algorithm exceeds a certain threshold value.

5. Method according to any one of claims to 4, **characterised in that** the calculation of the probability estimation takes the following factors into consideration:

(a)- if the bearer was recognised as having been received with errors in any of the last N frames;
(b)- if other bearers that operate on the same frequency as the evaluated one were recognised as having been received with errors in anyone of the last N frames;
(c)- if any other bearers were recognised as been received with errors in anyone of the last N frames;
(d)- if the bearer was operating on the same frequency as a reverse bearer that has failed in any of the preceding N frames;
(e)- if the evaluated bearer belongs to the same duplex bearer as a reverse bearer that has failed in anyone of the preceding N frames; and
(f)- if the evaluated bearer belongs to the duplex bearer associated with the reverse bearer that has failed in this same frame;

where N is the number of preceding frames considered by the algorithm.

6. **Method** according to claims 1 to 5, **characterised in that** the estimation of the most probable error situation in the evaluation of a forward bearer is defined by means of the following formula:

$$ est = \sum_{i=1}^{N} x_i k_i + \frac{1}{Y} \sum_{i=1}^{N} y_i l_i + \frac{1}{Z} \sum_{i=1}^{N} z_i m_i + \sum_{i=1}^{N} v_i n_i + \sum_{i=1}^{N} w_i p_i + w_0 p_0 - K $$

in which:

(a) N; $k_1$, ..., $k_N$; $l_1$,...,$l_N$,...,$m_1$, ..., $m_N$; $n_1$, ..., $n_N$; $P_1$, ..., $p_N$; po; K are constants of the algorithm; the parameter N being a positive integer number that represents the number of preceding frames which are taken into account in the evaluation process; the parameters $k_1$,..., $k_N$; $l_1$, ..., $l_N$; $m_1$, ..., $m_N$; $n_1$, ..., $n_N$; $p_1$, ..., $p_N$; $P_0$ being the weighting factors of the algorithm that give weight to the relative importance of the different variables in the algorithm computation; the parameter K being the threshold value which, when subtracted from the rest of the computation determines whether the result of the estimation is positive or negative, the first case meaning that the evaluated bearer has been received with errors and must be retransmitted and the second one that it has been received correctly;
(b) $x_1$, ..., $x_N$; $Y_1$, ..., $y_N$; $Z_1$, ..., $z_N$; $V_1$, ..., $v_N$; $w_1$, ..., $W_N$; wo; Y; Z are input variables with the following significance:

- $x_i$, i between 1 and N, equal to 1 ($x_i = 1$) if the evaluated bearer has been received with errors in the frame transmitted i frames before the present one; and otherwise $x_i = 0$;
- $y_i$, i between 1 and N, is the total number of forward bearers that have been declared as received with errors in the frame transmitted i frames before the present one;
- $z_i$, i between 1 and N, is the number of forward bearers that operate on the same frequency as the evaluated bearer and that were declared as received with errors in the frame transmitted i frames before the present one;
- $v_i$, i between 1 and N, equal to 1 if the evaluated bearer operates at the same frequency as a reverse bearer reported as received with errors by the MAC-mod2-ACK message in the frame transmitted i frames before the present one; and otherwise $v_i = 0$;
- $w_i$, i between 1 and N, equal to 1 if the evaluated bearer was the duplex bearer associated with a reverse bearer that has been received with errors in the frame transmitted i frames before the present one; and otherwise $w_i = 0$; and
- $w_0$ equal to 1 if the evaluated bearer is the duplex bearer associated with a reverse bearer received with errors in the present frame; and otherwise $w_0 = 0$;

(c) Y is the total number of forward bearers in the connection; and
Z is the total number of forward bearers that operate on the same frequency as the evaluated bearer.

7. **Method** according to claim **6, characterised in that** it is considered that a bearer has been received with errors if "est" $\geq$ 0; and it is considered that said bearer has been received successfully if "est" < 0.

8.   **Method** according to any one of claims 1 to 7, <u>**characterised in that**</u> the transmitting and receiving means operate according to the European "Digital Enhanced Cordless Telecommunications (DECT)" standard, employing the data bearer service called "MAC MOD-2 protected channel operation (Ip)" defined in the ETSI standard ETS-300175-3.

9.   **Method** according to any one of the claims 1 to 7, <u>**characterised in that**</u> the transmitting and receiving means, although not fully complying with the European "Digital Enhanced Cordless Telecommunications (DECT)" standard, do employ in whole or in part the MAC (medium access control) layer of the DECT, as defined in the standard ETS-300175-3, and make use of the data bearer service termed "MAC MOD-2 protected channel operation (Ip)" defined by the ETSI in said standard.

10.   **Method** according to any one of the claims 1 to 8, <u>**characterised in that**</u> selective retransmission is employed at a data link control (DLC) level of the time slots that may have been filtered by error into the estimation process by using a class of the DLC particularly envisaged for this process.

11.   **Method** according to claim 10, <u>**characterised in that**</u> the class of the DLC is distinguished from the standard class 1 DLC in the following characteristic:

- the reception of an FU6b frame over an acknowledgement channel $G_f$, containing an A/N bit of the receive sequence number with value "0" is interpreted as a request for selective retransmission and provokes the retransmission of a protocol data unit (PDU) indicated in bits ER7, ..., ER1.

12.   **Transmitter** including a transmitting means adapted to carry out the method according to any one of claims 1 to 11.

**Patentansprüche**

1.   **Verfahren zur Fehlerschätzung in der Informationsdatenübertragung** in einem Kommunikationssystem, in welchem Daten mittels Datenvorwärtsträgern von mindestens einem Übertragungsmittel an mindestens ein Empfangsmittel übertragen werden, <u>**dadurch gekennzeichnet, daß**</u> mindestens ein Übertragungsmittel mittels eines Schätsungsalgorthmus die wahrscheinlichste Fehlersituation in der Übertragung der jeweiligen Datenträger schätzt, die durch das Übertragungsmittel übertragen sind, als Antwort auf einen fehlenden Empfang einer Bestätigungsmeldung des Datenempfangs von jedem Empfangsmittel mittels eines Trägers in Rückwärtsrichtung, das heißt, vom Empfangsmittel an das Übertragungsmittel.

2.   **Verfahren** nach Anspruch 1, <u>**dadurch gekennzeichnet, daß**</u> in einer Situation der fehlenden Bestätigungsmeldung des Datenempfangs das Übertragungsmittel den entsprechenden Träger im Falle, daß der Schätzungsalgorithmus bestimmt, daß- eine Wahrscheinlichkeit der fehlerhaften Übertragung des Trägers vorhanden ist, wiederholt überträgt.

3.   **Verfahren** nach den vorhergehenden Ansprüchen, <u>**dadurch gekennzeichnet, daß**</u> der Algorithmus bezüglich jedes Vorwärtsträgers auf eine individuelle Weise arbeitet.

4.   **Verfahren** nach einem der Ansprüche 1 bis 3, <u>**dadurch gekennzeichnet, daß**</u> das Übertragungsmittel einen Vorwärtsträgern wiederholt übertragt, wenn eine Wahrscheinlichkeitsschätzung, die durch einen Algorithmus berechnet ist, einen bestimmten Schwellenwert übersteigt.

5.   **Verfahren** nach einem der Ansprüche 1 bis 4, <u>**dadurch gekennzeichnet, daß**</u> die Berechnung der Wahrscheinlichkeitsschätzung die folgenden Faktoren berücksichtigt:

(a) - Wenn erkannt wurde, daß der Träger mit Fehlern in einem der letzten N Frames empfangen worden ist,;
(b) Wenn erkannt wurde, daß andere Träger, die auf der gleichen Frequenz wie die bewertete Frequenz: arbeiten, mit Fehlern in irgendeinem der letzte N Frames empfangen worden sind;
(c) - Wenn erkannt wurde, daß andere Träger mit Fehlern in irgendeinem der letzten N Frames empfangen worden sind;
(d) - Wenn der Träger auf der gleichen Frequenz arbeitete wie ein Rückwartsträger, der in einem der vorhergehenden N Frames blockiert ist;
(e) - Wenn der bewertete Träger zum gleichen Duplexträger wie ein Ruckwärtsträger gehört, der in irgendeinem der vorhergehenden N Frames blockiert ist; und

(f) - Wenn der bewertete Träger zum Duplexträger gehört, der mit dem Rückwärtsträger verbunden ist, der in diesem gleichen Frame blockiert worden ist;
wo N die Anzahl der vorhergehenden Frames ist, die durch den Algorithmus berücksichtigt sind.

6. **Verfahren** nach Anspruch 1 bis 5, <u>**dadurch gekennzeichnet, daß**</u> die Schätzung der wahrscheinlichsten Fehlersituation in der Bewertung eines Vorwärtsträgers mittels der folgenden Formel definiert ist:

$$est = \sum_{i=1}^{N} x_i k_i + \frac{1}{Y}\sum_{i=1}^{N} y_i l_i + \frac{1}{Z}\sum_{i=1}^{N} z_i m_i + \sum_{i=1}^{N} v_i n_i + \sum_{i=1}^{N} w_i p_i + w_0 p_0 - K$$

in welcher;

(a) N; $k_1$, .... $k_N$; $l_1$ ..., $l_N$; $m_1$, ..., $m_N$; $n_1$, ..., $n_N$; $p_1$ ..., $p_N$; $p_0$; K Konstanten des Algorithmus sind; der Parameter N eine positive ganze Zahl ist, die die Anzahl der vorhergehenden Frames darstellt, die im Schätzungsprozeß berücksichtigt werden; Die Parameter $k_1$, ..., $k_N$; $l_1$ ..., $l_N$; ($m_1$, ..., $m_N$; $n_1$, ..., $n_N$; $p_1$ ..., $p_N$; $p_0$ die Bewertungs-faktoren des Algorithmus sind, der das Gewicht zur relativen Nichtigkeit der verschiedenen Variablen in der Algorithmusberechnung ergibt; der Parameter K der Schwellenwert ist, der nach Subtraktion vom Rest der Berechnung bestimmt, ob das Ergebnis der Schätzung positiv oder negativ ist, wobei der erste Fall bedeutet, daß der bewertete Träger mit Fehlern empfangen worden ist und wiederholt übertragen werden muß, und der zweite Fall, daß er korrekt empfangen worden ist;
(b) $X_1$, ..., $x_N$; $y_1$ ..., $y_N$; $z_1$, ..., $Z_N$; $V_1$, ..., $V_N$; $w_1$ ..., $w_N$; $W_0$; Y; Z Eingangsvariablen mit der folgenden Bedeutung sind:

- $x_i$, i zwischen 1. und N, gleich 1 ($x_i$ = 1), wenn der bewertete Träger in dem Frame mit empfangen worden ist, der i Frames vor dem vorliegenden Frame sendete; und andernfalls $X_i$ = 0;
- $y_i$, i zwischen 1 und N ist, der Gesamtanzahl der Vorwärtsträger, die als mit Fehlern empfangen in dem Frame erklärt worden sind, der i Frames vor dem vorliegenden Frame sendete;
- $Z_i$, i zwischen 1 und N ist, der Anzahl der Vorwärtsträger, die auf der gleichen Frequenz wie der bewertete Träger arbeiten und die als mit Fehlern empfangen in dem Frame erklärt wurden, der i Frames vor dem vorliegenden Frame sendete;
- $v_i$, i zwischen 1 und N, gleich 1, wenn der bewertete Träger auf der gleichen Frequenz wie ein Rückwärtsträger arbeitet, der als empfangen mit Fehlern durch die MAC-mod2-ACK- NACHRICHT berichtet wurde, in dem Frame, der i Frames vor dem vorliegenden Frame sendete; und andernfalls $v_i$ = 0 ;
- $w_i$, i zwischen 1 und N, gleich 1, wenn der bewertete Träger der Duplexträger war, der mit einem Rückwärtsträger verbunden ist, der mit Fehlern in dem Frame empfangen worden ist, der i Frames vor dem vorliegenden Frame sendete; und andernfalls $w_i$ = 0; und
- $w_0$ gleich 1, wenn der bewertete Träger der Duplexträger ist, der mit einem Rückwärtsträger verbunden ist, der mit Fehlern in dem vorliegenden Frame empfangen wurde; und andernfalls $W_0$ = 0;
(c) Y die Gesamtanzahl der Vorwärtsträger in der Verbindung ist; und

Z die Gesamtanzahl der Vorwärtsträger ist, die auf der gleichen Frequenz wie der bewertete Träger arbeiten.

7. **Verfahren** nach Anspruch 6, <u>**dadurch gekennzeichnet, daß**</u> es angesehen, wird, daß ein Träger mit Fehlern empfangen worden ist, wenn "est" $\geq$ 0; und es angesehen wird, daß der Träger erfolgreich empfangen worden ist, wenn "est" < 0.

8. **Verfahren** nach einem der Ansprüche 1 bis 7, <u>**dadurch gekennzeichnet, daß**</u> die Übertragungs- und Empfangs-mittel gemäß, dem Europäischen Standard "Digital Enhanced Cordless Telecommunications (DECT)" arbeiten, der den Daten-Trägerdienst verwendet, der mit "MAC MOD-2 geschützter Kanalbetrieb (Ip)" bezeichnet ist, der in dem ETSI-Standard ETS-300175-3 definiert ist.

9. **Verfahren** nach einem der Ansprüche 1 bis 7, <u>**dadurch gekennzeichnet, daß**</u> die Übertragungs- und Empfangs-mittel, obwohl nicht völlig den Europäischen Standard "Digital Enhanced Cordless Telecommunications (DECT)" erfüllend, ganz oder teilweise die MAC-Schicht (Medienzugangskontrollschicht/medium access control) des DECT nutzen, wie im Standard ETS-300175-3 definiert ist, und den Daten-Traqerdienst verwenden, der mit "MAC MOD-2 geschützter Kanalbetrieb (Ip)" bezeichnet ist, der durch ETSI in dem Standard definiert ist.

10. **Verfahren** nach einem der Ansprüche 1 bis 8, **dadurch gekennzeichnet, daß** selektive Übertragungswiederholung auf einer Bitübertragungsschichtebene (DLC-Ebene) der Zeitschlitze angewendet wird, die fälschlicherweise in den Schätzungsprozeß unter Verwendung einer Klasse der DLC gefiltert worden sein kann, die speziell für diesen Prozeß betrachtet sind.

11. **Verfahren** nach Anspruch 10, **dadurch gekennzeichnet, daß** sich die Klasse der DLC von der Standardklasse 1 DLC in der folgenden Charakteristik unterscheidet:

- der Empfang eines FU6b-Frame über einen Bestätigungskanal $G_f$, der ein A/N-Bit der Empfangsfolgenummer mit dem Wert "0" beinhaltet, wird wie eine Anforderung zur selektiven Übertragungswiederholung interpretiert und leitet die Übertragungswiederholung einer Pretokoll-Dateneinheit (PDU) ein, die in Bits ER7, ..., ER1 angegeben ist.

12. **Sender,** einschließend ein Übertragungsmittel, daß angepaßt ist das Verfahren nach einem der Ansprüche 1 bis 11 durchzuführen.

**Revendications**

1. **Procédé d'estimation d'erreur dans une transmission de données d'information** dans un système de communication dans lequel lesdites données sont transmises au moyen de supports d'acheminement de données depuis au moins un moyen de transmission vers au moins un moyen de réception, **caractérisé en ce que** ledit au moins un moyen de transmission estime, au moyen d'un algorithme d'estimation, la situation d'erreur la plus probable dans la transmission des supports de données respectifs transmis par ledit moyen de transmission, en réponse à une absence de réception d'un message de confirmation de réception de données provenant de chaque moyen de réception au moyen d'un support dans la direction inverse, autrement dit, dudit moyen de réception audit moyen de transmission.

2. **Procédé** selon la revendication 1, **caractérisé en ce Que** dans une situation d'absence de message de confirmation de réception de données, le moyen de transmission retransmet le support correspondant dans le cas où l'algorithme d'estimation détermine qu'il existe une probabilité que ledit support ait été transmis de manière erronée.

3. **Procédé** selon les revendications précédentes, **caractérisé, en ce que** l'algorithme fonctionne, par rapport à chaque support d'acheminement, d'une manière individuelle.

4. **Procédé** selon l'une quelconque des revendications 1 à 3, **caractérisé en ce que** le moyen de transmission retransmet un support d'acheminement si une estimation de probabilité calculée par un algorithme dépasse une certaine valeur de seuil.

5. **Procédé** selon l'une quelconque des revendications 1 à 4, **caractérisé en ce que** le calcul de l'estimation de probabilité prend les facteurs suivants en considération :

(a) - si le support a été reconnu comme ayant été reçu avec des erreurs dans l'une quelconque des N dernières trames ;
(b) - si d'autres supports qui fonctionnent sur la même fréquence que le support évalué ont été reconnus comme ayant été reçus avec des erreurs dans l'une quelconque des N dernières trames;
(c) - si d'autres supports quelconques ont été reconnus comme ayant été reçus avec des erreurs dans l'une quelconque des N dernières trames ;
(d) - si le support a fonctionné sur la même fréquence qu'un support inverse qui a échoué dans l'une quelconque des N trames précédentes;
(e) - si le support évalué appartient au même support bidirectionnel qu'un support inverse qui a échoué dans l'une quelconque des N trames précédentes et
(f) - si le support évalué appartient au support bidirectionnel associé au support inverse qui a échoué dans cette même trame;

N étant le nombre de trames précédentes prises en considération par l'algorithme.

6.  **Procédé** selon l'une quelconque des revendications 1 à 5, **caractérisé en ce que** l'estimation de la situation d'erreur la plus probable dans l'évaluation d'un support d'acheminement est définie au moyen de la formule suivante :

$$est = \sum_{i=1}^{N} x_i k_i + \frac{1}{Y} \sum_{i=1}^{N} y_i l_i + \frac{1}{Z} \sum_{i=1}^{N} z_i m_i + \sum_{i=1}^{N} v_i n_i + \sum_{i=1}^{N} w_i p_i + w_0 p_0 - K$$

dans laquelle :

   **(a)** $N$; $k_1,..., k_N$; $l_1, ...,l_N$; $m_1, ...m_N$; $n_1..., n_N$; $P_1, ..., p_N$; $p_0$; $K$ sont des constantes de l'algorithme le paramètre $N$ étant un nombre entier positif qui représente le nombre de trames précédentes qui sont prises en considération dans le processus d'évaluation; les paramètres $k_1, ..., k_N$; $l_1, ..., l_N$; $m_1, ..., m_N$; $n_1, ..., n_N$; $p_1, ..., p_N$; $P_0$ étant les facteurs de pondération de l'algorithme qui donnent une pondération à l'importance relative des différentes variables dans le calcul de l'algorithme le paramètre $K$ étant la valeur de seuil qui, lorsqu'elle est soustraite du reste du calcul détermine si le résultat de l'estimation est positif ou négatif, le premier cas signifiant que le support évalué a été reçu avec des erreurs et doit être retransmis et le second cas signifiant qu'il a été reçu correctement ;
   **(b)** $x_1,..., x_N$; $y_1,..., y_N$; $Z_1....,Z_N$; $V_1, ... v_N$; $w_1,..., w_N$ ; $w_o$; $Y$; $Z$ sont des variables d'entrée avec la signification suivante :

      - $x_i$, 1 compris entre 1 et N, est égal à 1 ($X_i = 1$) si le support évalué a été reçu avec des erreurs dans la trame transmise i trames avant la présente trame ; et sinon $x_1 = 0$ ;
      - $y_i$, i compris entre 1 et N, est le nombre total de supports d'acheminement qui ont été déclarés comme ayant été reçus avec des erreurs dans la trame transmise i trames avant la présente trame ;
      - $z_i$, compris entre 1 et N, est le nombre de supports d'acheminement qui fonctionnent sur la même fréquence que le support évalué et qui ont été déclarés comme ayant été reçus avec des erreurs dans la trame transmise i trames avant la présente trame ;
      - $v_i$, i compris entre 1 et N, est égal à 1 si le support évalué fonctionne à la même fréquence qu'un support inverse signalé comme ayant été reçu avec des erreurs par le message MAC-mod2-ACK dans la trame transmise i trames avant la présente trame ; et sinon $v_i = 0$;
      - $w_i$, i compris entre 1 et N, est égal à 1 si la support évalué était le support bidirectionnel associé à un support inverse qui a été reçu avec des erreurs dans la trame transmise i trames avant la présente trame ; et sinon $w_i = 0$ ; et
      - $w_0$ est égal à 1 si le support évalué est le support bidirectionnel associé à un support inverse reçu avec des erreurs dans la présente trame ; et sinon $w_0 = 0$ ;

   **(c)** $Y$ est le nombre total de supports d'acheminement dans la connexion ; et

   $Z$ est le nombre total de supports d'acheminement qui fonctionnent sur la même fréquence que le support évalué.

7.  **Procédé** selon la revendication 6, **caractérisé en ce qu'**il est considéré qu'un support a été reçu avec des erreurs si « est » $\geq 0$ ; et **en ce qu'**il est considéré que ledit support a été reçu avec succès si « est » < 0.

8.  **Procédé** selon l'une quelconque des revendications 1 à 7, **caractérisé en ce que** les moyens de transmission et de réception fonctionnent selon la norme européenne de «télécommunications numériques améliorées sans fil (DECT)», employant le service de support de données appelé «fonctionnement de canal protégé MOD-2 MAC (lp) » défini selon la norme ETSI ETS-300175-3.

9.  **Procédé** selon l'une quelconque des revendications 1 à 7, **caractérisé en ce que** les moyens de transmission et de réception, bien que non totalement compatibles avec la norme européenne de « télécommunications numériques améliorées sans fil (DECT) », emploient en totalité ou en partie la couche MAC (contrôle d'accès au support) DECT, telle que définie dans la norme ETS-300175-3, et utilisent le service de support de données dénommé « fonctionnement de canal protégé MOD-2 MAC (lp)» défini par l'ETSI dans ladite norme.

10. **Procédé** selon l'une quelconque des revendications 1 à 8, **caractérisé en ce qu'**une retransmission sélective est employée à un niveau de contrôle de liaison de données (DLC) des créneaux temporels qui peuvent avoir été filtrés par erreur dans le processus d'estimation en utilisant une classe de DLC envisagée particulièrement pour ce processus.

11. **Procédé** selon la revendication 10, **<u>caractérisé en ce que</u>** la classe de DLC se distingue de la classe standard 1 DLC par la caractéristique suivante:

- la réception d'une trame FU6b sur un canal de confirmation $G_f$, contenant un bit A/N du numéro de séquence de réception avec une valeur « 0 » est interprétée comme une demande pour une retransmission sélective et provoque la retransmission d'une unité de données de protocole (PDU) indiquée dans les bits ER7,..., ER1.

12. **Émetteur** comprenant un moyen de transmission destiné à réaliser le procédé selon l'une quelconque des revendications 1 à 11.

**EP 0 984 582 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5677918 A